# EUROPEAN PATENT SPECIFICATION

(11) **EP 4 098 428 B1**
(45) Date of publication and mention of the grant of the patent: **12.03.2025**
(21) Application number: 22175444.3
(22) Date of filing: 25.05.2022
(51) Int. Cl.: B29C 65/44, B29C 65/50, B29C 65/56, B29C 65/64, B29K 105/06, B29K 63/00, B29K 307/04, B29K 705/02

(54) **METHOD TO JOIN POLYMER-MATRIX REINFORCED COMPOSITE MATERIALS**
VERFAHREN ZUM VERBINDEN VON POLYMERMATRIXVERSTÄRKTEN VERBUNDWERKSTOFFEN
PROCÉDÉ D'ASSEMBLAGE DE MATÉRIAUX COMPOSITES À MATRICE POLYMÈRE RENFORCÉE

(30) Priority: 01.06.2021 IT 202100014363
(43) Date of publication of application: 07.12.2022
(73) Proprietor: Universita' Degli Studi Dell'Aquila, 67100 L'Aquila (AQ) (IT)
(72) Inventor: LAMBIASE, Francesco, 67100 L'Aquila (IT); PAOLETTI, Alfonso, 67100 L'Aquila (IT)
(74) Representative: Studio Torta S.p.A.

(56) References cited:
- EP-A1- 2 832 526
- ANDREAS GOMER ET AL: "Gefügige Kunststoffe", KUNSTSTOFFE 12/2016, 1 December 2016 (2016-12-01), pages 73 - 75, XP055346355, Retrieved from the Internet <URL:https://www.kunststoffe.de/_storage/asset/2544254/storage/master/file/28831142/download/KU_2016_12_Gefuegige-Kunststoffe-.pdf> [retrieved on 20170215]

## Description

### CROSS-REFERENCE TO RELATED APPLICATIONS

This Patent Application claims priority from Italian Patent Application No. 102021000014363 filed on 01/06/2021.

### TECHNICAL FIELD OF THE INVENTION

The present invention concerns a method to join polymer-matrix reinforced composite materials.

### STATE OF THE ART

Multi-material hybrid structures (HS) are used in a wide range of applications, including transport, electronics, civil uses and in the biomedical field. HS comprise components made of different materials, including composite materials. This allows the performance of the structure to be enhanced according to the philosophy of the "right material in the right place". Among the composite materials of greatest interest, fibre-reinforced materials should be mentioned, in particular in the transport industry.

One of the critical points relating to the use of reinforced composite materials is joining them to other materials, whether the latter are other reinforced composite materials or not.

This type of joint is generally made by means of two types of processes: adhesive joints and/or mechanical joints. Both these technologies are characterized by different limits. For example, adhesive joints show a high resistance to shear stress and a low resistance to peeling stress. For this purpose, the edge to be joined is appropriately shaped to increase the performance of the adhesive joints. Furthermore, the adhesive joints require problematic surface pre-treatments. In fact, the pre-treatments are both mechanical (removal of the superficial layer by means of metal brushes, sanding etc.) and chemical (use of solvents) and also have a significant environmental impact. The mechanical characteristics of the adhesive joints are further characterized by a high long-term variability and uncertainty.

Mechanical joints (riveting, bolting etc.), on the other hand, are widely used in the aeronautical and shipbuilding industries. However, also the mechanical joining processes have several limits and problems, including the need for preliminary drilling of both sheets, with consequent problems of coaxiality of the holes. Furthermore, for polymer-matrix reinforced composite materials the drilling necessarily entails interruption of the fibres, delamination, protruding fibres, areas of recession of the matrix, residual tensions induced by the different thermomechanical properties of the matrix and the reinforcement. The need is therefore felt for a solution able to join fibre-reinforced composite materials which, in addition to being easy and quick to carry out, guarantees sealing results comparable if not superior to the techniques of the known art currently in use.

Andreas Gomer et al:"Gefügige Kunststoffe", Kunststoffe 12/2016, 1 December 2016, pages 73-75, discloses a method to join a polymer-matrix reinforced composite material to another material, comprising in succession: a superficial removal step; an assembling step; a heating step and a cooling step. EP2832526A1 describes a method for manufacturing a joint member obtained by joining a carbon fibre composite material containing a thermoplastic resin as a matrix and a metal.

### SUBJECT AND SUMMARY OF THE INVENTION

The inventors of the present invention have devised a joining method for joining fibre-reinforced composite materials.

The subject of the present invention is a method to join a polymer-matrix reinforced composite material to another material; said method comprising in succession:
- a superficial removal step, in which a superficial layer of polymer matrix is removed from a joining surface of said composite material;
- an assembling step, in which an intermediate joining layer made of thermoplastic polymer is interposed between said composite material and said other material; said joining surface of said composite material being arranged in contact with said intermediate joining layer;

- a heating step, in which said intermediate joining layer undergoes a heating operation until it reaches the softening point of the thermoplastic polymer making it up, and in which said composite material and said other material are held against each other; the intermediate joining layer being arranged between said composite material and said other material;
- a cooling step, in which the thermoplastic polymer of the intermediate joining layer is brought back to a temperature lower than its softening point;
said method being characterized in that the superficial layer (h) of polymer matrix removed in said superficial removal step has a height ranging from 20 to 200 µm.

Preferably, the intermediate joining layer has a thickness ranging from 0.05 to 0.20 mm.

Preferably, the intermediate joining layer is made of a material having a tensile strength exceeding 40 MPa.

Preferably, the intermediate joining layer is made of a material comprised in the group consisting of polyether ether ketone (PEEK), polyphenylene sulfide (PPS), polyetherimide (PEI), polyamide (PA) and polycarbonate (PC).

Preferably, said superficial removal step comprises a laser ablation operation.

Preferably, said other material is comprised in the group consisting of metal material, thermoplastic polymer, thermosetting polymer, thermosetting-matrix composite material, thermoplastic-matrix composite material and reinforced plastic. If the other material is also a polymer-matrix reinforced composite material, it will be expedient to apply the superficial removal step also on said material.

Preferably, said metal material has a joining surface, in use in contact with said intermediate joining layer, in which a plurality of grooves are obtained; more preferably said grooves are undercut.

Preferably, said other material is a conductor material and said heating step comprises a passage of current; more preferably a first and a second electrode are arranged in contact with a surface of said other material opposite its joining surface. Preferably, said other material comprises a base component and a joining element made of conductive material and housed in a through hole previously obtained in said base component; said joining element comprising a locking end arranged to cooperate with a free surface of said base component and a coupling end; said locking end having an axial coupling surface arranged in contact with said intermediate joining layer and in which a plurality of grooves are obtained; more preferably said grooves are undercut.

### BRIEF DESCRIPTION OF THE DRAWINGS

Some embodiment examples are reported below purely by way of non-limiting illustration with the help of the attached figures, in which:
- figure 1 illustrates schematically a section of an embodiment of the method of the present invention;
- figure 2 is a graph showing the results of a traction test of a joint according to figure 1; and
- figures 3a and 3b illustrate schematically two steps of a further embodiment of the method of the present invention.

### DETAILED DESCRIPTION OF PREFERRED EMBODIMENTS OF THE INVENTION

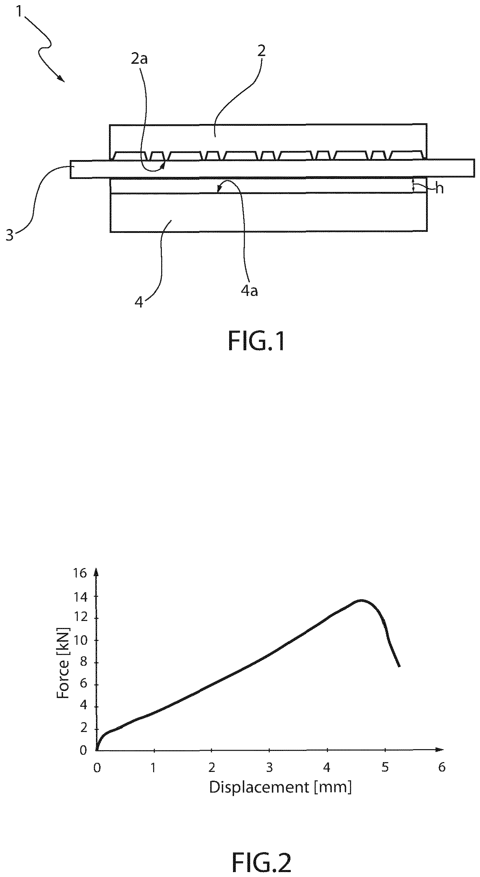

Figure 1 illustrates a joining system 1 according to the method subject of the present invention. The system 1 comprises a first material 2 made of aluminium alloy AA7075 with a textured lower surface (joining surface) 2a; an intermediate joining layer 3 made of PEEK, with thickness of 0.1 mm, and a composite material 4 with carbon fibre-reinforced epoxy matrix.

On the textured joining surface 2a a plurality of grooves are obtained having undercut profile, which can be produced by means of laser processing. Furthermore, the composite material 4 comprises a joining surface 4a that faces onto the intermediate joining layer 3 and has undergone a functionalization treatment by means of laser ablation.

The first material 2 and the composite material 4 are in sheet form and are arranged with respective joining surfaces 2a and 4a in contact, on opposite sides, with the intermediate joining layer 3.

The functionalization treatment of the joining surface 4a removes a superficial layer h of epoxy resin with a height of 0.1 mm.

The ablation was carried out with a pulsed fibre laser (YLP-RA30-1-50-20-20 by IPG) having a wavelength of 1064 nm.

In particular, the following conditions were adopted: distance of the laser source 40 µm; beam speed 2000 mm/s; power 30 W; pulse frequency 30 kHz; pulse duration 50 ns. In the above-mentioned conditions, a power of 20 kW and an energy of 1 mJ were recorded for each single pulse.

After the functionalization treatment by means of ablation, an assembly was produced as illustrated in figure 1.

The heating was obtained by friction. In particular, a rotating cylindrical punch was used (with diameter 10 mm), with a rotation speed of 8000 RPM. During the joining process, the punch is in contact with an upper surface of the first material 2. The punch was pushed against the first material 2 with a contact force of 1000 N. The heating time is 4 s. Subsequently, the punch was retracted at a speed of 50 mm/s.

The test was conducted using an electrospindle with maximum power of 5 kW. Said electrospindle was fitted on a universal testing machine model 322.121 by MTS.

Once the punch was retracted, the intermediate joining layer was given the necessary time to cool and therefore return to the consistency it had prior to the heating step.

As may be immediately evident to a person skilled in the art, if the first material is not metallic and, therefore, is not electrically and thermally conductive, different methods will have to be used to obtain heating of the intermediate joining layer.

The article produced as described above underwent a tensile test. For this purpose a universal test machine model 322.121 by MTS was used equipped with a loading cell with capacity of 25 kN. The results of the tensile test are reported in the graph of figure 2 showing a tensile strength of 13600 N which, with a joining area of 400 mm², enabled a resistance of approximately 34 MPa to be obtained.

According to the present invention, the joining occurs by softening of the intermediate joining layer 3. In fact, the intermediate joining layer 3, in a softening condition, penetrates between the exposed fibres on the joining surface 4a of the composite material 4 and interacts with the joining surface 2a of the first material 2.

The material 1 can be different from that described above. In fact, it can be made of another metal material, such as, for example, a magnesium alloy or titanium alloy, or a polymer material such as, for example, a thermosetting polymer or a thermoplastic polymer, or it can be a composite material.

The intermediate joining layer can be different from the one described above. For example, it can be made of another thermoplastic polymer material with high mechanical performance such as PPS, PEI, PEEK or PEKK.

The composite material 4 can be different from the one described above and can be a composite material with continuous fibres, a composite material with discontinuous fibres or a laminated composite material. The polymer matrix of the composite material can be thermoplastic or thermosetting. Furthermore, the fibres composing the reinforcement can be of different type, for example carbon fibres, glass fibres, boron fibres, basalt fibres, aramid fibres or natural fibres.

As can be seen from the above description, the method subject of the present invention allows fibre-reinforced composite materials to be joined with other materials in a simple effective manner, without requiring the intervention of adhesive elements or mechanical joints.

Furthermore, the method subject of the present invention has the advantages that it can be implemented even when one of the sides of the joint is difficult to access, and the joint is disassembled by means of a simple heating operation. In particular, if the joint is damaged, it can be restored by means of a simple heating and compression operation.

Lastly, according to the present invention the joint is created by softening of one single material (the intermediate joining layer), therefore without problems of different thermal contraction if two materials are melted.

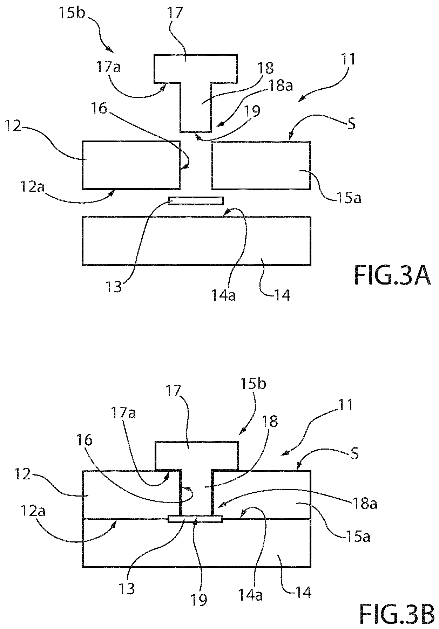

Figures 3a and 3b illustrate a further joining system 11 according to the method subject of the present invention. The system 11 comprises a first material 12 identical to the first material 2, an intermediate joining layer 13 identical to the intermediate joining layer 3 and a composite material 14 identical to the composite material 4. The composite material 14 has undergone a functionalization treatment identical to the one carried out on the composite material 4.

The first material 12 and the composite material 14 are in sheet form and are arranged with respective joining surfaces 12a and 14a in contact, on opposite sides, with the intermediate joining layer 13.

In the system 11 the first material 12 comprises a base component 15a and a joining element 15b made of titanium alloy Ti-6Al-4V and arranged to engage a hole 16 (figure 3b) previously obtained in the base component 15a. In particular, the hole 16 can be made by means of any mechanical process and the joining element 15b is only inserted subsequently.

For the method subject of the present invention it is essential that the joining element 15b has a melting point higher than that of the intermediate joining layer 13.

The joining element 15b comprises a locking head 17 and a stem 18 extending from the locking head 17. The locking head 17 is arranged with one of its surfaces 17a in abutment against a free surface S of the base component 15.

The stem 18 comprises a free end 18a having an axial coupling surface 19, in which a plurality of grooves having an undercut profile have been obtained. The grooves can be obtained by means of laser processing.

After the ablation has been performed on the joining surface 14a of the composite material 14, the assembly step is carried out as illustrated in the sequence of figures 3a and 3b. Subsequently the heating and compression step was carried out, entailing the use of a spot welder with two electrodes both arranged in contact with the locking head 17.

## Claims

1. A method to join a polymer-matrix reinforced composite material (4; 14) to another material (2; 12); said method comprising in succession:
- a superficial removal step, during which a superficial layer (h) of polymer matrix is removed from a joining surface (4a; 14a) of said composite material (4; 14);
- an assembling step, during which an intermediate joining layer (3; 13) made of a thermoplastic polymer is interposed between said composite material (4; 14) and said other material (2; 12); said joining surface (4a, 14a) of said composite material (4; 14) being placed in contact with said intermediate joining layer (3; 13);
- a heating step, during which said intermediate joining layer (3; 13) is subjected to a heating operation until it reaches the softening point of the thermoplastic polymer making it up, and wherein said composite material (4; 14) and said other material (2; 12) are held against one another; the intermediate joining layer (3; 13) being arranged between said composite material (4; 14) and said other material (2; 12);
- a cooling step, during which the thermoplastic polymer of the intermediate joining layer (3; 13) is brought back to a temperature that is lower than its softening point;
said method being **characterized in that** the superficial layer (h) of polymer matrix removed in said superficial removal step has a height ranging from 20 to 200 µm.

2. The method according to claim 1, **characterized in that** the intermediate joining layer (3; 13) has a thickness ranging from 0.05 to 0.20 mm.

3. The method according to claim 1 or 2, **characterized in that** the intermediate joining layer (3; 13) is made of a material having a tensile strength exceeding 40 MPa.

4. The method according to claim 3, **characterized in that** the intermediate joining layer (3; 13) is made of a material comprised in the group consisting of polyetheretherketone (PEEK), polyphenylene sulfide (PPS), polyetherimide (PEI), polyamide (PA), polycarbonate (PC).

5. The method according to one of the preceding claims, **characterized in that** said superficial removal step comprises a laser ablation operation.

6. The method according to one of the preceding claims, **characterized in that** said other material (2; 12) is comprised in the group consisting of metal material, thermosetting polymer, thermoplastic polymer, thermosetting composite material, thermoplastic composite material, reinforced plastic.

7. The method according to claim 6, **characterized in that** said metal material has a joining surface (2a) which, in use, is in contact with said intermediate joining layer and in which a plurality of grooves are obtained.

8. The method according to claim 7, **characterized in that** said grooves are undercut.

9. The method according to claim 1, **characterized in that** said other material (12) comprises a base component (15a) and a joining element (15b), which is made of a conductive material and is housed in a through hole (16) previously made in said base component (15a); said joining element comprising a locking end (17), which is suited to cooperate with a free surface (S) of said base component (15a), and a coupling end (18a); said coupling end (18a) having an axial coupling surface (19), which is contact with said intermediate joining layer(13) and in which a plurality of grooves are obtained.

10. The method according to claim 9, **characterized in that** said grooves are undercut.

## Patentansprüche

1. Verfahren zum Verbinden eines mit einer Polymermatrix verstärkten Verbundmaterials (4; 14) mit einem anderen Material (2; 12), wobei das Verfahren nacheinander umfasst:
- einen Schritt des oberflächlichen Entfernens, bei dem eine oberflächliche Schicht (h) der Polymermatrix von einer Verbindungsoberfläche (4a; 14a) des Verbundmaterials (4; 14) entfernt wird;
- einen Zusammenbauschritt, bei dem eine aus einem thermoplastischen Polymer hergestellte Zwischenverbindungsschicht (3; 13) zwischen dem Verbundmaterial (4; 14) und dem anderen Material (2; 12) angeordnet wird; wobei die Verbindungsoberfläche (4a, 14a) des Verbundmaterials (4; 14) in Kontakt mit der Zwischenverbindungsschicht (3; 13) platziert wird;
- einen Erwärmungsschritt, bei dem die Zwischenverbindungsschicht (3; 13) einem Erwärmungsvorgang unterzogen wird, bis sie den Erweichungspunkt des sie bildenden thermoplastischen Polymers erreicht, und bei dem das Verbundmaterial (4; 14) und das andere Material (2; 12) gegeneinander gehalten werden; wobei die Zwischenverbindungsschicht (3; 13) zwischen dem Verbundmaterial (4; 14) und dem anderen Material (2; 12) angeordnet ist;
- einen Abkühlungsschritt, bei dem das thermoplastische Polymer der Zwischenverbindungsschicht (3; 13) auf eine Temperatur wieder gebracht wird, die unter seinem Erweichungspunkt liegt;
wobei das Verfahren **dadurch gekennzeichnet ist, dass** die oberflächliche Schicht (h) der Polymermatrix, die in dem Schritt des oberflächlichen Entfernens entfernt wird, eine Höhe im Bereich von 20 bis 200 µm aufweist.

2. Verfahren nach Anspruch 1, **dadurch gekennzeichnet, dass** die Zwischenverbindungsschicht (3; 13) eine Dicke im Bereich von 0,05 bis 0,20 mm aufweist.

3. Verfahren nach Anspruch 1 oder 2, **dadurch gekennzeichnet, dass** die Zwischenverbindungsschicht (3; 13) aus einem Material mit einer Zugfestigkeit von mehr als 40 MPa hergestellt ist.

4. Verfahren nach Anspruch 3, **dadurch gekennzeichnet, dass** die Zwischenverbindungsschicht (3; 13) aus einem Material hergestellt ist, das in der Gruppe bestehend aus Polyetheretherketon (PEEK), Polyphenylensulfid (PPS), Polyetherimid (PEI), Polyamid (PA), Polycarbonat (PC) enthalten ist.

5. Verfahren nach einem der vorhergehenden Ansprüche, **dadurch gekennzeichnet, dass** der Schritt des oberflächlichen Entfernens einen Laserablationsvorgang umfasst.

6. Verfahren nach einem der vorhergehenden Ansprüche, **dadurch gekennzeichnet, dass** das andere Material (2; 12) in der Gruppe bestehend aus Metallmaterial, duroplastischem Polymer, thermoplastischem Polymer, duroplastischem Verbundmaterial, thermoplastischem Verbundmaterial und verstärktem Kunststoff enthalten ist.

7. Verfahren nach Anspruch 6, **dadurch gekennzeichnet, dass** das Metallmaterial eine Verbindungsoberfläche (2a) aufweist, die im Gebrauch in Kontakt mit der Zwischenverbindungsschicht steht und in der eine Vielzahl von Nuten erhalten wird.

8. Verfahren nach Anspruch 7, **dadurch gekennzeichnet, dass** die Nuten hinterschnitten sind.

9. Verfahren nach Anspruch 1, **dadurch gekennzeichnet, dass** das andere Material (12) eine Basiskomponente (15a) und ein Verbindungselement (15b) umfasst, das aus einem leitenden Material hergestellt ist und in einem Durchgangsloch (16) untergebracht ist, das zuvor in der Basiskomponente (15a) hergestellt wurde; wobei das Verbindungselement ein Verriegelungsende (17), das geeignet ist, mit einer freien Oberfläche (S) der Basiskomponente (15a) zusammenzuwirken, und ein Kopplungsende (18a) umfasst; wobei das Kopplungsende (18a) eine axiale Kopplungsoberfläche (19) aufweist, die mit der Zwischenverbindungsschicht (13) in Kontakt steht und in der eine Vielzahl von Nuten erhalten wird.

10. Verfahren nach Anspruch 9, **dadurch gekennzeichnet, dass** die Nuten hinterschnitten sind.

## Revendications

1. Procédé d'assemblage d'un matériau composite renforcé par une matrice polymère (4 ; 14) à un autre matériau (2 ; 12) ; ledit procédé comprend successivement :
- une étape d'enlèvement superficiel, au cours de laquelle une couche superficielle (h) de matrice polymère est enlevée d'une surface d'assemblage (4a ; 14a) dudit matériau composite (4 ; 14) ;
- une étape d'assemblage, au cours de laquelle une couche d'assemblage intermédiaire (3 ; 13) en polymère thermoplastique est interposée entre ledit matériau composite (4 ; 14) et ledit autre matériau (2 ; 12) ; ladite surface d'assemblage (4a, 14a) dudit matériau composite (4 ; 14) étant mise en contact avec ladite couche d'assemblage intermédiaire (3 ; 13) ;
- une étape de chauffage, au cours de laquelle ladite couche d'assemblage intermédiaire (3 ; 13) est soumise à une opération de chauffage jusqu'à ce qu'elle atteigne le point de ramollissement du polymère thermoplastique qui la constitue, et dans laquelle ledit matériau composite (4 ; 14) et ledit autre matériau (2 ; 12) sont maintenus l'un contre l'autre ; la couche d'assemblage intermédiaire (3 ; 13) étant disposée entre ledit matériau composite (4 ; 14) et ledit autre matériau (2 ; 12) ;
- une étape de refroidissement, au cours de laquelle le polymère thermoplastique de la couche intermédiaire d'assemblage (3 ; 13) est ramené à une température inférieure à son point de ramollissement ;
ledit procédé est **caractérisé en ce que** la couche superficielle (h) de matrice polymère enlevée lors de ladite étape d'enlèvement superficiel a une hauteur comprise entre 20 et 200 µm.

2. Procédé selon la revendication 1, **caractérisé en ce que** la couche d'assemblage intermédiaire (3 ; 13) a une épaisseur comprise entre 0,05 et 0,20 mm.

3. Procédé selon la revendication 1 ou 2, **caractérisé en ce que** la couche d'assemblage intermédiaire (3 ; 13) est constituée d'un matériau dont la résistance à la traction est supérieure à 40 MPa.

4. Procédé selon la revendication 3, **caractérisé en ce que** la couche d'assemblage intermédiaire (3 ; 13) est constituée d'un matériau compris dans le groupe constitué par le polyétheréthercétone (PEEK), le sulfure de polyphénylène (PPS), le polyétherimide (PEI), le polyamide (PA), le polycarbonate (PC).

5. Procédé selon l'une des revendications précédentes, **caractérisé en ce que** ladite étape d'enlèvement superficiel comprend une opération d'ablation au laser.

6. Procédé selon l'une des revendications précédentes, **caractérisé en ce que** ledit autre matériau (2 ; 12) est compris dans le groupe constitué par les matériaux métalliques, les polymères thermodurcissables, les polymères thermoplastiques, les matériaux composites thermodurcissables, les matériaux composites thermoplastiques, les plastiques renforcés.

7. Procédé selon la revendication 6, **caractérisé en ce que** ledit matériau métallique présente une surface d'assemblage (2a) qui, lors de l'utilisation, est en contact avec ladite couche d'assemblage intermédiaire et dans laquelle une pluralité de rainures sont obtenues.

8. Procédé selon la revendication 7, **caractérisé en ce que** lesdites rainures sont en contre-dépouille.

9. Procédé selon la revendication 1, **caractérisé en ce que** ledit autre matériau (12) comprend un composant de base (15a) et un élément d'assemblage (15b), qui est fait d'un matériau conducteur et est logé dans un trou de passage (16) préalablement réalisé dans ledit composant de base (15a) ; ledit élément d'assemblage comprend une extrémité de verrouillage (17), pouvant coopérer avec une surface libre (S) dudit composant de base (15a), et une extrémité de couplage (18a) ; ladite extrémité de couplage (18a) présente une surface de couplage axiale (19), qui est en contact avec ladite couche d'assemblage intermédiaire (13) et dans laquelle une pluralité de rainures sont obtenues.

10. Procédé selon la revendication 9, **caractérisé en ce que** lesdites rainures sont en contre-dépouille.
